# EUROPÄISCHE PATENTSCHRIFT

(11) **EP 3 102 468 B1**
(45) Veröffentlichungstag und Bekanntmachung des Hinweises auf die Patenterteilung: **11.10.2017**
(21) Anmeldenummer: 15705539.3
(22) Anmeldetag: 06.02.2015
(51) Int. Cl.: B60T 15/52, B60T 15/04, B60T 15/02, B60T 13/66

(54) **MANUELL BETÄTIGBARES SCHNELLLÖSEVENTIL**
MANUALLY ACTUATABLE QUICK-RELEASE VALVE
VANNE À DÉCLENCHEMENT RAPIDE POUVANT ÊTRE ACTIONNÉE MANUELLEMENT

(30) Priorität: 06.02.2014 DE 102014101458
(43) Veröffentlichungstag der Anmeldung: 14.12.2016
(73) Patentinhaber: KNORR-BREMSE Systeme für Schienenfahrzeuge GmbH, 80809 München (DE)
(72) Erfinder: LIEBL, Thomas, 80687 München (DE); ANTON, Thomas, 85614 Kirchseeon (DE); HOLZ, Michael, 85757 Karlsfeld (DE); FREIBURGER, Jan, 85757 Karlsfeld (DE)
(86) Internationale Anmeldenummer: PCT/EP2015/052477
(87) Internationale Veröffentlichungsnummer: WO 2015/118093

(56) Entgegenhaltungen:
- DE-B- 1 176 696
- GB-A- 326 677
- GB-A- 803 686
- GB-A- 1 104 557
- US-A- 1 447 706
- US-A- 2 302 377
- US-A- 2 687 921
- US-A- 2 725 261
- US-A- 3 385 638
- US-A- 5 083 843

## Beschreibung

Die vorliegende Erfindung betrifft ein manuell betätigbares Schnelllöseventil zum Absenken des Fluiddrucks in einer Referenzdruckleitung auf den Fluiddruck in einer Hauptluftleitung, welches zum manuellen Lösen an einer Druckluftbremseneinrichtung angebracht ist, umfassend eine elastische Membran zum druckabhängigen Verschließen und Öffnen eines Kanals von der Referenzdruckleitung an eine Staudruckkammer, wobei die Membran zur einen Seite vom Fluiddruck in der Hauptluftleitung und von der anderen Seite vom Fluiddruck in der Referenzdruckleitung beaufschlagt ist, ein monostabiles Wegeventil mit einem Ventilschieber zum druckabhängigen Verschließen und Aufhalten des Kanals, wobei der Ventilschieber zur einen Seite vom Fluiddruck in der Staudruckkammer und zur anderen Seite vom Fluiddruck in der Referenzdruckleitung beaufschlagt ist, und welcher in Schaltstellung den Kanal verschließt und in Grundstellung öffnet, sowie ein manuelles Betätigungselement, welches bei Betätigung ein monostabiles Schieberelement in Schaltstellung bewegt, wobei dieses Schieberelement in Grundstellung einen Kanal von der Staudruckkammer zur einer mit der Atmosphäre verbundenen Kammer bildet, um einen Durchfluss von Fluid aus der Staudruckkammer an die Atmosphäre zu erlauben.

Das Einsatzgebiet der Erfindung erstreckt sich auf Druckluftbremsen, insbesondere von Schienenfahrzeugen. Um die Bremsen bei einer Druckluftbremse zu betätigen, wird in Bremszylindern ein Überdruck erzeugt, wobei dieser Vorgang bei einer indirekten Druckluftbremse durch das Absenken des Luftdrucks in der Hauptluftleitung unter einen Schwellwert unterhalb des Luftdrucks in einer Referenzdruckleitung ausgelöst wird. Um die Bremsen wieder zu lösen, wird entweder der Fluiddruck in der Hauptluftleitung auf den in der Referenzdruckleitung angehoben oder der Fluiddruck in der Referenzdruckleitung auf den in der Hauptluftleitung abgesenkt, was jeweils eine Entlüftung der Bremszylinder und damit das Lösen der Bremsen auslöst. Danach werden in der Regel beide Leitungen wieder auf den in UIC Bestimmung UIC541-03 festgelegten Regelbetriebsdruck von 5 bar angehoben. Der Fluiddruck in der Hauptluftleitung lässt sich über ein Führerbremsventil in der Zugspitze erhöhen. Da es gemäß UIC Bestimmung UIC540 und DIN Norm EN15355 möglich sein muss, die Bremsen auch unabhängig vom Führerbremsventil zu lösen, werden manuelle Schnelllöseventile eingesetzt, die in allen Abschnitten des Zugs durch eine einfache Handbewegung ausgelöst werden und die dann so lange Fluiddruck aus der Referenzdruckleitung ablassen, bis diese den Fluiddruck der Hauptluftleitung annimmt. Zusätzlich lassen sich mit diesen Schnelllöseventilen Drücke in der Referenzdruckleitung über dem Regelbetriebsdruck abbauen.

Aus dem Stand der Technik (Dokumentation "B-EC10.65 Beschreibung Steuerventil KE0dvKSLn- 6"d", Knorr-Bremse AG, Rev. 01 (05/2009), Mai 2009) geht ein Schnelllöseventil hervor, das eine Absenkung des Fluiddrucks in der Referenzdruckleitung auf den Fluiddruck der Hauptluftleitung herbeiführt. Hier wird per Handkraft ein Betätigungselement betätigt, wobei die Betätigung durch mechanische Kopplung, also durch Kraftschluss, in die lineare Bewegung eines Schieberelements umgeformt wird, welches durch mechanische Kopplung einen monostabilen Ventilschieber in seine Grundstellung verschiebt, wodurch ein Kanal von der Referenzdruckleitung an die Atmosphäre geöffnet wird. Mit Grundstellung ist bei einem monostabilen Element die Stellung gemeint, die es ohne Einwirkung einer externen Kraft einnimmt, während die andere Stellung als Schaltstellung bezeichnet wird. Dieser Kanal ist so bedüst, dass unterhalb des Ventilschiebers ein Staudruck entsteht, welcher dem Fluiddruck über dem Ventilschieber nahezu entspricht. Der sich dadurch nahezu im Fluiddruckgleichgewicht befindende Ventilschieber wird nun durch die Rückstellkraft einer Druckfeder in seiner Grundstellung gehalten. Sobald der Fluiddruck in der Referenzdruckleitung unter den Fluiddruck in der Hauptluftleitung abgesunken ist, bewegt sich eine Membran, die auf der einen Seite von dem Fluiddruck in der Referenzdruckleitung und auf der anderen Seite von dem Fluiddruck in der Hauptluftleitung beaufschlagt ist, und die über Druckfedern in mechanischer Kopplung mit dem Ventilschieber steht, entgegen der Richtung dieser Rückstellkraft, und verschiebt den Ventilschieber in dessen Schaltstellung, wodurch der Kanal von der Referenzdruckleitung an die Atmosphäre geschlossen wird. Die Seite des Ventilschiebers, die in Richtung der Rückstellkraft zeigt, wird nun vom Fluiddruck in der Referenzdruckleitung beaufschlagt, und die andere Seite wird vom Luftdruck der Atmosphäre beaufschlagt. Wenn die Membran sich in dieser Konfiguration aufgrund ansteigenden Fluiddrucks in der Referenzdruckleitung in Richtung der Rückstellkraft bewegt, wird der Ventilschieber durch die Fluiddruckdifferenz seiner beiden Seiten in Schaltstellung gehalten, wodurch der Kanal von der Referenzdruckleitung zur Atmosphäre geschlossen bleibt.

Diese technische Lösung beruht auf dem Prinzip, dass ein monostabiles Wegeventil durch mechanische Kopplung mit dem Betätigungselement und der Membran in seine Grundstellung und Schaltstellung bewegt wird. Die Bewegungen des Schieberelements im Wegeventil, des Ventilschiebers und der Membran verlaufen in der Bauform, die typischerweise aufgrund ihrer Einfachheit Verwendung findet, in eine gemeinsame Raumrichtung. Deshalb besitzt die gesamte Konstruktion typischerweise eine in diese Raumrichtung unvorteilhaft ausgedehnte, wenig kompakte Bauform. Mechanische Elemente zum Transport und zur Umlenkung von Kräften und Bewegungen werden vermieden, da sie einen erhöhten Aufwand bei der Konstruktion und Wartung bedeuten und Quellen für mechanische Fehler und Defekte darstellen. Ferner sind die Elemente Betätigungselement, Schieberelement, Ventilschieber und Membran aufgrund ihrer mechanischen Kopplung nicht frei positionierbar, wodurch einschränkende Vorgaben an die Bauform des Ventils entstehen. Ferner ist die mechanische Kraft, die von der Membran auf den Ventilschieber wirkt, von der Fläche der Membran und der Druckdifferenz zwischen Referenzdruckleitung und Hauptluftleitung abhängig, und die Kraft, die von dem Schieberelement auf den Ventilschieber wirkt, von der auf das Betätigungselement ausgeübten Handkraft abhängig. Beide Kräfte können deshalb unnötig hohe mechanische Belastungen auf den Ventilschieber bewirken. Ferner ist die Handkraft, die nötig ist, um den Ventilschieber aus der Schaltstellung in die Grundstellung zu bewegen, abhängig von dem Druck in der Referenzdruckleitung, und kann dadurch unnötig hoch sein und ferner nicht konstant eingestellt werden.

Die DE 11 76 669 B offenbart ein gattungsgemäßes Schnelllöseventil für Druckluftbremsen, das manuell über einen Stößel betätigbar ist. Je nach Betätigungszustand lässt sich ein quer hierzu angeordnetes Ventilschieberelement zwischen einer Grundstellung und einer Schaltstellung bewegen.

Es ist daher Aufgabe der vorliegenden Erfindung, ein manuelles Schnelllöseventil der vorstehend beschriebenen Art dahingehend weiter zu verbessern, dass das Wegeventil frei von mechanischen Kopplungen zu anderen Komponenten arbeitet.

Die Aufgabe wird ausgehend von einem Schnelllöseventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Schieberelement in Schaltstellung einen Kanal von der Referenzdruckleitung zu der Staudruckkammer öffnet, so dass unabhängig von der Stellung des Ventilschiebers ein Füllen der Staudruckkammer mit Fluid aus der Referenzdruckleitung möglich ist.

Der Vorteil des erfindungsgemäßen Schnelllöseventils besteht insbesondere darin, dass nach Betätigung des Betätigungselements das Fluid in der Staudruckkammer den Druck des Fluids in der Referenzdruckleitung annimmt, ohne dass irgendeine mechanische Kopplung mit dem Wegeventil existiert. Als Folge befindet sich das Wegeventil im Fluiddruckgleichgewicht und bewegt sich in seine Grundstellung.

Das folgende Abfließen von Fluid an die Atmosphäre verläuft dann wie anhand des Beispiels aus dem Stand der Technik beschrieben.

Gemäß einer die Erfindung verbessernden Maßnahme wird vorgeschlagen, dass die Membran durch einen Unterdruck in der Referenzdruckleitung gegenüber der Hauptluftleitung so ausgelenkt wird, dass der Durchfluss von der Referenzdruckleitung zu der Staudruckkammer blockiert wird. Dadurch wird, wenn der Fluiddruck in der Referenzdruckleitung unter den der Hauptluftleitung gefallen ist, das Wegeventil pneumatisch in seine Schaltstellung bewegt, da der Druck in der Staudruckkammer, die über das Schieberelement in Grundstellung mit der Atmosphäre verbunden ist, auf den Atmosphärendruck abfällt. Diese Bewegung wird im Stand der Technik durch eine mechanische Kopplung der Membran über Druckfedern an das Wegeventil gelöst, mit den oben beschriebenen Nachteilen. Das Verhindern eines Teilchenflusses kann dabei geschehen, indem die elastomere Membran selbst an eine Kanalmündung eines Kanals anliegt, vorzugsweise mit einer Wölbung der Membran, die mit dem Innenrand der Kanalmündung abschließen kann, oder indem auf der Membran ein zusätzliches Dichtungselement angebracht ist, das mit dem Innenrand der Kanalmündung abschließen kann.

Da bei dieser Variante keine mechanische Kopplung vom Wegeventil zum Betätigungselement oder zu der Membran existiert, können diese Einheiten bei der Planung der Konstruktion weitgehend beliebig positioniert und orientiert werden, insofern Kanäle als Verbindung zwischen den Einheiten vorgesehen sind. Erste Designstudien zeigen, dass somit eine Reduktion der Bauhöhe des Schnelllöseventils um circa 40% gegenüber dem oben beschriebenen Stand der Technik erreichbar ist.

Gemäß einer anderen die Erfindung verbessernden Maßnahme wird vorgeschlagen, dass der Anschluss der Referenzdruckleitung des Schnelllöseventils an die Referenzdruckleitung der Druckluftbremse des Schienenfahrzeugs bedüst ist. Dies bewirkt, dass die Hauptluftleitung bei einer Erstbefüllung des mit Atmosphärendruck gefluteten Systems auf den Regelbetriebsdruck einen Überdruck gegenüber der Referenzdruckleitung annimmt, was wie oben beschrieben das Schließen des Kanals in die Staudruckkammer verursacht. Infolgedessen kann kein Fluid an die Atmosphäre abfließen und der Fluiddruck in der Referenzdruckleitung steigt auf den Regelbetriebsdruck an.

Zusätzlich kann ein Stauraum vorgesehen werden, der an die Referenzdruckleitung angeschlossen ist. Durch die Wahl des Volumens dieses Stauraums lässt sich dann unter anderem die zeitliche Länge des erstmaligen Füllens der Referenzdruckleitung und die des Lösens der Bremsen über das Schnelllöseventil beeinflussen.

Gemäß einer anderen die Erfindung verbessernden Maßnahme wird vorgeschlagen, an der Membran beispielsweise über einen Kolben eine Kolbenstange zu befestigen, welche in einer für das Fluid undurchlässigen Führung aus dem Gehäuse geführt wird, welche also die Auslenkung der Membran an außen liegende Elemente wie die Steuerung eines Bremszylinders übertragen kann. Somit kann das Schnelllöseventil neben der Angleichung des Fluiddrucks in Referenzdruckleitung und Hauptluftleitung gleichzeitig in einem getrennten Bereich die Lösung der Bremsen auslösen.

Die Zeitdauer, über die das per Handkraft bewegliche Element ausgelenkt werden muss kann dadurch verkürzt werden, dass das Schieberelement in der Schaltstellung einen Teilchenfluss von der Staudruckkammer an die Atmosphäre gänzlich verhindert und nicht nur, wie im Stand der Technik, durch Bedüsung drosselt. In dieser Ausführung kann kein Fluid der Staudruckkammer entweichen, wodurch der Fluiddruck in diesem Raum schneller den Fluiddruck der Referenzdruckleitung annimmt.

Gemäß einer anderen die Erfindung verbessernden Maßnahme wird vorgeschlagen, den Kanal von der Staudruckkammer zu der an die Atmosphäre grenzenden Kammer in dem Schieberelement zu führen, und zwar von einer in der Staudruckkammer liegenden Kanalmündung zu einer in einer Seitenfläche des Schieberelements liegenden bedüsten Kanalmündung. Dies besitzt den Vorteil, dass das Schieberelement nur gegen die Kraft der Druckfeder und die Reibekraft ihrer Abdichtung arbeiten muss, und nicht gegen beispielsweise eine vom Fluiddruck in der Referenzdruckleitung abhängige Kraft.

Zusätzlich kann das Schieberelement durch mindestens zwei entlang der Bewegungsrichtung des Schieberelements versetzte, im Ventilgehäuse angebrachte Dichtungsringe dynamisch abgedichtet werden, wobei sich eine Kanalmündung eines Kanals zur Referenzdruckleitung zwischen zwei der Dichtungsringen befindet, die so angebracht sind, dass sich die Kanalmündung an der Seite des Schieberelements in Schaltstellung auch zwischen diesen zwei Ventilringen befindet. Somit wirkt das Schieberelement in Verbindung mit den Dichtungsringen selbst als Ventil, ohne dass weitere Bauteile und somit Produktionskosten und Fehlerquellen entstehen.

Weitere die Erfindung verbessernde Maßnahmen werden nachstehend gemeinsam mit der Beschreibung von einem bevorzugten Ausführungsbeispiel der Erfindung anhand der Figur näher dargestellt. Die Figur zeigt einen Längsschnitt durch ein erfindungsgemäßes Schnelllöseventil.

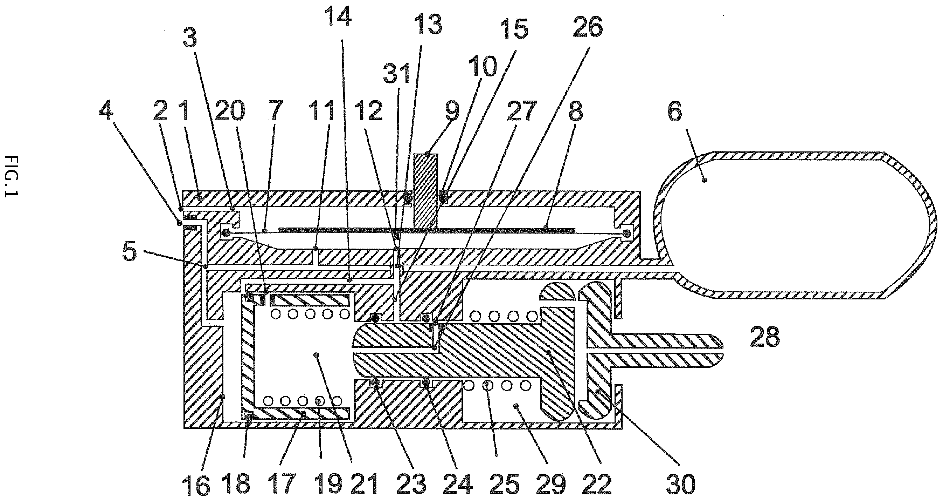

Gemäß Figur 1 besitzt das ein Ventilgehäuse 1 aufweisende Schnelllöseventil eine Mündung 2, welche mit einer Hauptluftleitung 3 verbunden ist, und eine Düse 4, welche mit einer Referenzdruckleitung 5 verbunden ist. Die Referenzdruckleitung 5 ist dabei an einen Stauraum 6 angeschlossen. In einer ersten Kammer im oberen Bereich des Schnelllöseventils befindet sich eine elastische, am Rand eingefasste Membran 7, welche auf der oberen Seite von Fluiddruck aus der Hauptluftleitung 3 und auf der unteren Seite von Fluiddruck aus der Referenzdruckleitung 5 beaufschlagt ist. Auf der an die Hauptluftleitung 3 grenzenden Seite der Membran ist ein Kolben 8 mit Kolbenstange 9 angebracht, welche durch eine abgedichtete Öffnung 10 aus der Hauptluftleitung 3 hinaus geführt wird. Diese Kolbenstange kann über einen nicht dargestellten Mechanismus die Stellung eines nicht weiter dargestellten Bremszylinders beeinflussen.

Auf der Unterseite des Teils der Kammer, in der sich die Membran 7 befindet, befinden sich zwei Kanalmündungen 11 und 12, wobei die Kanalmündung 11 mit der Referenzdruckleitung 5 verbunden ist und die Kanalmündung 12 mit einem Kanal 13, welcher sich aufteilt in zwei Kanäle 14 und 15.

Der Kanal 14 mündet in die Innenseite des Mantels eines drehzylinderförmigen Wegeventils 16. In diesem Wegeventil 16 befindet sich ein drehzylinderförmiger Ventilschieber 17 mit Dichtungsring 18, welcher den Ventilschieber 17 gegenüber dem umliegenden Gehäuse 1 dynamisch abdichtet. Der Ventilschieber 17 arbeitet mit einer Druckfeder 19 zusammen, die mit dem Gehäuse 1 zusammenarbeitet, und besitzt deshalb eine Grundstellung mit gestreckter Feder 19 und eine Schaltstellung mit gestauchter Feder 19.

In Grundstellung schließt der Ventilschieber 17 eine Verbindung von dem Kanal 14 zur Referenzdruckleitung 5 und öffnet eine Verbindung vom Kanal 14 zu einer Düse 20, die in eine Staudruckkammer 21 mündet. Bei einem ausreichend hohen Überdruck von der Referenzdruckleitung 5 gegenüber der Staudruckkammer 21 wird der Ventilschieber 17 gegen die Kraft der Druckfeder 19 in Schaltstellung verschoben und schließt die Verbindung von dem Kanal 14 zu der Düse 20 und somit zur Staudruckkammer 21 und öffnet gleichzeitig eine Verbindung von der Referenzdruckleitung 5 zu dem Kanal 14.

Das drehzylinderförmige Wegeventil 16 weist ferner auf der Deckenfläche, die an die Staudruckkammer 21 grenzt, eine Öffnung auf, in welcher ein Schieberelement 22 durch Dichtungsringe 23, 24 dynamisch abgedichtet ist. Das Schieberelement 22 arbeitet gegen eine Druckfeder 25, die zwischen dem Schieberelement 22 und dem Gehäuse 1 wirkend angeordnet ist, und besitzt dadurch eine Grundstellung und eine Schaltstellung. In diesem Schieberelement ist ein Kanal 26 ausgebildet, welcher an einem Ende in die Staudruckkammer 21 mündet und an einem anderen Ende, welches aus einer bedüsten Kanalmündung 27 besteht, bei Grundstellung des Schieberelements 22 in eine mit der Atmosphäre 28 verbundene Kammer 29 mündet, und bei Schaltstellung an den Kanal 15 mündet. Der Dichtungsring 23 dichtet dabei die Staudruckkammer 21 gegen den Kanal 15 ab, und der Dichtungsring 24 dichtet den Kanal 15 gegen die Kammer 29 und somit gegen die Atmosphäre 28 ab.

In der Kammer 29 befindet sich an das Schieberelement 22 anliegend ein Betätigungselement 30, welches einen Kanal von der Kammer 29 an die Atmosphäre 28 führt, und welches von außen manuell betätigbar ist. Wird in diesem Ausführungsbeispiel der außen liegende Teil des Betätigungselements 30 gekippt, so kippt auch der innen liegende Teil des Betätigungselements 30, und das angrenzende Schieberelement 22 wird entgegen der Kraft der Druckfeder 25 in Schaltstellung verschoben, wodurch die Verbindung von der bedüsten Kanalmündung 27 in die Kammer 29 und in die Staudruckkammer 21 geöffnet wird. Dieser kompakte Aufbau ermöglicht die folgenden Abläufe.

Eine erste Füllung auf Regelbetriebsdruck findet in der Regel statt wenn die Vorrichtung mit Atmosphärendruck geflutet ist. In diesem Fall befinden sich die Membran 7 und der Ventilschieber 17 und das Schieberelement 22 jeweils im Fluiddruckgleichgewicht, wodurch die Membran 7 sich in einer horizontalen Mittelstellung in einer Ebene mit ihrer Einspannung befindet und der Ventilschieber 17 in Grundstellung den Kanal 14 mit der Staudruckkammer 21 verbindet und das Schieberelement 22 in Grundstellung die Staudruckkammer 21 mit der Kammer 29 und somit mit der Atmosphäre 28 verbindet. Wird nun durch die Anschlüsse 2 und 4 ein Fluid in das Schnelllöseventil geleitet, so wächst der Fluiddruck in der Hauptluftleitung 3 schneller als der Fluiddruck der Referenzdruckleitung 5, und zwar aufgrund der Bedüsung des Anschlusses 4, aufgrund des hohen Volumens des Stauraums 6 und aufgrund der bedüsten Verbindung über den Kanal 14, die Staudruckkammer 21, den Kanal 15 und der Kammer 29 zur Atmosphäre 28. In Folge des entstehenden Überdrucks in der Hauptluftleitung 3 gegenüber der Referenzdruckleitung 5 wird die Membran 7 nach unten gepresst, wodurch sie die Kanalmündung 12 und in diesem Ausführungsbeispiel auch die Kanalmündung 11 verschließt. Ein Dichtungselement 31 kann an der Membran angebracht sein um diesen Verschluss zu realisieren. Ab diesem Zeitpunkt kann kein Fluid mehr über den Kanal 11, die Staudruckkammer 21, den Kanal 26 und die Kammer 29 an die Atmosphäre 28 abfließen. Der Fluiddruck in der Referenzdruckleitung 5 steigt jetzt also an, bis die Fluiddruckdifferenz von der Referenzdruckleitung 5 zur Atmosphäre 28 so groß wird, dass der Ventilschieber 17 sich entgegen der Kraft der Druckfeder 19 bewegt und die Dichtung 18 des Ventilschiebers 17 sich hinter die Kanalmündung des Kanals 14 verschiebt, also den Kanal 14 von der Staudruckkammer 21 trennt und mit der Referenzdruckleitung 5 verbindet. Sobald der Fluiddruck in der Referenzdruckleitung 5 sich an den in der Hauptluftleitung 3 angleicht, befindet sich die Membran 7 im Fluiddruckgleichgewicht und nimmt ihre neutrale Stellung in einer Ebene mit ihrer Einspannung ein. Das Schnelllöseventil befindet sich jetzt in Fahrtstellung.

Eine Bremsung wird durch das Absenken des Fluiddrucks in der Hauptluftleitung 3 durch ein nicht dargestelltes Führerbremsventil eingeleitet. Die Membran 7 wird durch den Überdruck von Referenzdruckleitung 5 gegenüber der Hauptluftleitung 3 zusammen mit Kolben 8 und Kolbenstange 9 nach oben bewegt. Das Schnelllöseventil befindet sich jetzt in Bremsstellung.

Das Lösen der Bremse wird durch eine Betätigung des Betätigungselements 30 ausgelöst. Das Schieberelement 22 bewegt sich in Schaltstellung, wodurch sich die bedüste Kanalmündung 27 des Kanals zwischen die Dichtungsringe 23 und 24 bewegt und eine Verbindung von der Referenzdruckleitung 5 über den Kanal 15 zu der Staudruckkammer 21 herstellt. Dieser nimmt in Folge den Fluiddruck der Referenzdruckleitung 5 an, wodurch der Ventilschieber 17 sich im Fluiddruckgleichgewicht befindet und in Grundstellung verschoben wird. Jetzt wird der Griff des Betätigungselements 30 losgelassen, so dass das Schieberelement 22 durch die Druckfeder 25 in Grundstellung verschoben wird und der Kanal 26 eine Verbindung von der Staudruckkammer 21 an die Kammer 29 und somit an die Atmosphäre herstellt. In Folge fließt Fluid aus der Referenzdruckleitung über den Kanal 14, die Staudruckkammer 21, den Kanal 26 und die Kammer 29 an die Atmosphäre 28 ab. Die Düse 20 und die bedüste Kanalmündung 27 sind dabei so gewählt, dass ein Fluid so viel schneller durch die Düse 20 als durch die bedüste Kanalmündung 27 fließen kann, dass sich ein Staudruck in der Staudruckkammer 21 bildet, der bewirkt, dass sich der Ventilschieber 17 nahezu im Fluiddruckgleichgewicht befindet und somit in Grundstellung verharrt. Sobald der Fluiddruck in der Referenzdruckleitung 5 unter den der Hauptluftleitung 3 gesunken ist, senkt die Membran 7 sich ab, was durch die Abwärtsbewegung der Kolbenstange 9 in einer nicht dargestellten Vorrichtung ein Lösen der Bremszylinder auslöst. Anschließend verschließt die Membran 7 die Kanalmündung 12 und in diesem Ausführungsbeispiel auch die Kanalmündung 11, verhindert somit ein weiteres Abfließen von Fluid aus der Referenzdruckleitung 5 an die Atmosphäre 28 und hält den Fluiddruck in der Referenzdruckleitung 5 somit konstant. Ein weiterer Bremsvorgang oder ein Füllen des Systems mit Fluid auf den Regelbetriebsdruck verlaufen nun jeweils wie oben beschrieben.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind.

So ist es beispielsweise auch möglich, dass die Kammern und Ventilschieber nicht drehzylinderförmig sind, sondern beispielsweise quaderförmig sind oder in Querschnitt senkrecht zur Bewegungsrichtung beliebige Formen aufweisen.

Außerdem ist denkbar, dass die Translationsbewegung des Schieberelements statt durch Kippen des Betätigungselements durch andere mechanische Kraftübertragungsprinzipien, beispielsweise durch eine Schraubbewegung oder durch eine schiefe Ebene, und / oder durch ein anderes Betätigungselement, beispielsweise durch einen Druckknopf, erfolgt.

Ferner ist denkbar, dass durch das Schieberelement statt des Ventilschiebers ein Sitzventil betätigt wird, über welches dann der Druckausgleich von Referenzdruckleitung und Atmosphäre erfolgt.

### Bezugszeichenliste

- 1: Ventilgehäuse
- 2: Mündung der Hauptluftleitung
- 3: Hauptluftleitung
- 4: Mündung der Referenzdruckleitung
- 5: Referenzdruckleitung
- 6: Stauraum
- 7: Membran
- 8: Kolben
- 9: Kolbenstange
- 10: Öffnung
- 11: Kanalmündung zur Referenzdruckleitung
- 12: Kanalmündung zum Kanal
- 13: Kanal
- 14: Kanal zur Staudruckkammer
- 15: Kanal zum Schieberelementkanal
- 16: Wegeventil
- 17: Ventilschieber
- 18: Dichtungsring des Ventilschiebers
- 19: Druckfeder des Ventilschiebers
- 20: Düse des Ventilschiebers
- 21: Staudruckkammer
- 22: Schieberelement
- 23: Dichtungsring links des Schieberelements
- 24: Dichtungsring rechts des Schieberelements
- 25: Druckfeder des Schieberelement
- 26: Kanal des Schieberelements
- 27: Bedüste Mündung des Kanals des Schieberelements
- 28: Atmosphäre

- 29: Kammer
- 30: Betätigungselement
- 31: Dichtungselement

## Patentansprüche

1. Manuell betätigbares Schnelllöseventil zum Absenken des Fluiddrucks in einer Referenzdruckleitung (5) auf den Fluiddruck in einer Hauptluftleitung (3), welches zum manuellen Lösen an einer Druckluftbremseneinrichtung angebracht ist, umfassend:
- eine elastische Membran (7) zum druckabhängigen Verschließen und Öffnen eines Kanals (14) von der Referenzdruckleitung (5) an eine Staudruckkammer (21), wobei die Membran (7) zur einen Seite vom Fluiddruck in der Hauptluftleitung (3) und von der anderen Seite vom Fluiddruck in der Referenzdruckleitung (5) beaufschlagt ist,
- ein monostabiles Wegeventil (16) mit einem Ventilschieber (17) zum druckabhängigen Verschließen und Aufhalten des Kanals (14), wobei der Ventilschieber (17) zur einen Seite vom Fluiddruck in der Staudruckkammer (21) und zur anderen Seite vom Fluiddruck in der Referenzdruckleitung (5) beaufschlagt ist, und welcher in Schaltstellung den Kanal (14) verschließt und in Grundstellung öffnet,
- ein manuelles Betätigungselement (30), welches bei Betätigung ein monostabiles Schieberelement (22) in Schaltstellung bewegt, wobei dieses Schieberelement (22) in Grundstellung einen Kanal (26) von der Staudruckkammer (21) zur einer mit der Atmosphäre (28) verbundenen Kammer (29) bildet, um einen Durchfluss von Fluid aus der Staudruckkammer (21) an die Atmosphäre (28) zu erlauben, **dadurch gekennzeichnet, dass** das Schieberelement (22) in Schaltstellung einen weiteren Kanal (15) von der Referenzdruckleitung (5) zu der Staudruckkammer (21) öffnet, um unabhängig von der Stellung des Ventilschiebers (17) ein Füllen der Staudruckkammer (21) mit Fluid aus der Referenzdruckleitung (5) zu erlauben.

2. Schnelllöseventil nach Anspruch 1,
**dadurch gekennzeichnet, dass** die Membran (7) durch einen Überdruck in der Hauptluftleitung (3) gegenüber der Referenzdruckleitung (5) eine solche Form annimmt, dass die Membran (7) eine Kanalmündung (12) des Kanals (14) verschließt.

3. Schnelllöseventil nach Anspruch 2,
**dadurch gekennzeichnet, dass** die Membran (7) durch Anliegen der Membran (7) an die Kanalmündung (12) diese Kanalmündung verschließt.

4. Schnelllöseventil nach Anspruch 2,
**dadurch gekennzeichnet, dass** die Membran (7) auf ihrer Oberfläche ein Dichtungselement (31) besitzt, welches durch Anliegen des Dichtungselements (31) an die Kanalmündung (12) diese Kanalmündung verschließt.

5. Schnelllöseventil nach einem der vorherigen Ansprüche,
**dadurch gekennzeichnet, dass** mindestens ein Anschluss (4) der Referenzdruckleitung (5) für eine externe Vorrichtung zum Befüllen der Referenzdruckleitung (5) bedüst ist.

6. Schnelllöseventil nach einem der vorherigen Ansprüche,
**dadurch gekennzeichnet, dass** an die Referenzdruckleitung (5) ein Stauraum (6) zum Erhöhen des Volumens der Referenzdruckleitung (5) angeschlossen ist.

7. Schnelllöseventil nach einem der vorherigen Ansprüche,
**dadurch gekennzeichnet, dass** die Membran (7) über einen Kolben (8) eine Kolbenstange (9) bewegt, um die der Position der Membran (7) an einen externen Mechanismus zu übertragen, welcher in Abhängigkeit dieser Position den Fluiddruck in mindestens einem Bremszylinder regelt.

8. Schnelllöseventil nach einem der vorherigen Ansprüche,
**dadurch gekennzeichnet, dass** das Schieberelement (22) in Schaltstellung einen Durchfluss von der Staudruckkammer (21) an die Atmosphäre verhindert, um das Aufbauen eines Staudrucks in der Staudruckkammer (21) zu beschleunigen.

9. Schnelllöseventil nach einem der vorherigen Ansprüche, **dadurch gekennzeichnet, dass** der Kanal (26) in dem Schieberelement (22) ausgebildet ist, und zwar von einer in der Staudruckkammer (21) liegenden Kanalmündung zu einer in einer Seitenfläche des Schieberelements (22) liegenden Kanalmündung.

10. Schnelllöseventil nach Anspruch 9,
**dadurch gekennzeichnet, dass** das Schieberelement (22) durch zwei Dichtungsringe (23, 24) dynamisch gegenüber dem Gehäuse abgedichtet ist, die so axial beabstandet voneinander gelegen sind, dass sich die Kanalmündung in der Seitenfläche des Schieberelements (22) in Schaltstellung des Schieberelements (22) zwischen beiden Dichtungsringen (23, 24) befindet und in Grundstellung außerhalb derselben.

11. Schnelllöseventil nach einem der vorherigen Ansprüche,
**dadurch gekennzeichnet, dass** die Monostabilität des Schieberelements (22) oder des Ventilschiebers (17) durch je eine Druckfeder (25; 19) realisiert ist, welche zwischen einer Stirnseite des jeweiligen Schiebers (22; 17) und dem Gehäuse (1) wirkend angeordnet ist.

## Claims

1. Manually actuatable quick-release valve for reducing the fluid pressure in a reference pressure line (5) to the fluid pressure in a main air line (3), which is suitable for manual release on a compressed air brake unit, comprising:
- an elastic diaphragm (7) for pressure-dependent closing and opening of a channel (14) from the reference pressure line (5) to a dynamic pressure chamber (21), wherein the diaphragm (7) is pressurized on one side by the fluid pressure in the main air line (3) and on the other side by the fluid pressure in the reference pressure line (5),
- a monostable directional control valve (16) with a valve slide (17) for pressure-dependent closing and holding open of the channel (14), wherein the valve slide (17) is pressurized on one side by the fluid pressure in the dynamic pressure chamber (21) and on the other side by the fluid pressure in the reference pressure line (5), and which closes the channel (14) in the switched position and opens it in the home position;
- a manual actuating element (30), which upon actuation moves a monostable slide element (22) into the switched position, wherein said slide element (22) in the home position forms a channel (26) from the dynamic pressure chamber (21) to a chamber (29) connected to the atmosphere (28) in order to allow the flow of fluid from the dynamic pressure chamber (21) to the atmosphere (28),
**characterised in that** the slide element (22) in the switched position opens a further channel (15) from the reference pressure line (5) to the dynamic pressure chamber (21), in order to allow the dynamic pressure chamber (21) to be filled with fluid from the reference pressure line (5) independently of the position of the valve slide (17).

2. Quick-release valve according to claim 1,
**characterised in that** the diaphragm (7) adopts, due to an overpressure in the main air line (3) with respect to the reference pressure line (5), such a form that the diaphragm (7) closes a channel mouth (12) of the channel (14).

3. Quick-release valve according to claim 2,
**characterised in that** the diaphragm (7) closes the channel mouth (12) through abutment of the diaphragm (7) against the channel mouth (12).

4. Quick-release valve according to claim 2,
**characterised in that** the diaphragm (7) has a sealing element (31) on its surface, which, through the abutment of the sealing element (31) against the channel mouth (12), closes this channel mouth.

5. Quick-release valve according to one of the preceding claims,
**characterised in that** at least one connection (4) of the reference pressure line (5) for an external device is sprayed for filling the reference pressure line (5).

6. Quick-release valve according to one of the preceding claims,
**characterised in that** a storage space (6) is attached to the reference pressure line (5) to increase the volume of the reference pressure line (5).

7. Quick-release valve according to one of the preceding claims,
**characterised in that** the diaphragm (7) moves a piston rod (9) via a piston (8) in order to transfer the position of the diaphragm (7) to an external mechanism, which controls the fluid pressure in at least one brake cylinder in dependence on this position.

8. Quick-release valve according to one of the preceding claims,
**characterised in that** the slide element (22) in the switched position prevents a flow from the dynamic pressure chamber (21) to the atmosphere, in order to accelerate the build-up of a dynamic pressure in the dynamic pressure chamber (21).

9. Quick-release valve according to one of the preceding claims, **characterised in that** the channel (26) is formed in the slide element (22), and indeed from a channel mouth lying in the dynamic pressure chamber (21) to a channel mouth lying in a side face of the slider element (22).

10. Quick-release valve according to claim 9,
**characterised in that** the slide element (22) is dynamically sealed, by two sealing rings (23, 24), with respect to the housing, the sealing rings being axially spaced apart from each other so that the channel mouth in the side face of the slide element (22) in the switched position of the slide element (22) is located between the two sealing rings (23, 24) and in the home position is located outside thereof.

11. Quick-release valve according to one of the preceding claims,
**characterised in that** the monostability of the slide element (22) or the valve slide (17) is realised by a respective compression spring (25; 19), which is arranged to be effective between an end face of the respective slide (22; 17) and the housing (1).

## Revendications

1. Vanne de desserrage rapide pouvant être actionnée manuellement pour abaisser la pression du fluide dans un conduit (5) de pression de référence à la pression du fluide dans un conduit (3) d'air principal, qui est mise pour desserrer manuellement un dispositif de frein à air comprimé, comprenant :
- une membrane (7) élastique pour fermer et ouvrir, en fonction de la pression, un canal (14) du conduit (5) de pression de référence à une chambre (21) de pression d'accumulation, la membrane (7) étant soumise, d'un côté, à la pression du fluide dans le conduit (3) d'air principal et, de l'autre côté, à la pression du fluide dans le conduit (5) de pression de référence,
- un distributeur (16) monostable ayant un tiroir (17) pour fermer et maintenir, en fonction de la pression, le canal (14), le tiroir (17) étant soumis, d'un côté, à la pression du fluide dans la chambre (21) de pression d'accumulation et, de l'autre côté, à la pression du fluide dans le conduit (5) de pression de référence et lequel, en une position de manoeuvre, ferme le canal (14) et, en une position de base l'ouvre,
- un élément (30) d'actionnement manuel, qui, à l'actionnement, met un élément (22) monostable de tiroir en position de manoeuvre, cet élément (22) du tiroir formant, en la position de base, un canal allant de la chambre 21) de pression d'accumulation à une chambre (29) communiquant avec l'atmosphère (28) pour permettre un passage du fluide de la chambre (21) de pression d'accumulation à l'atmosphère (28), **caractérisée en ce que** l'élément (22) du tiroir ouvre, en une position de manoeuvre, un autre canal (15) allant du conduit (5) de pression de référence à la chambre (21) de pression d'accumulation pour permettre, indépendamment de la position du tiroir (17), de remplir la chambre (21) de pression d'accumulation de fluide à partir du conduit (5) de pression de référence.

2. Vanne de desserrage rapide suivant la revendication 1, **caractérisée en ce que** la membrane (7) prend, par une surpression dans le conduit (3) d'air principal par rapport au conduit (5) de pression de référence, une forme telle que la membrane (7) ferme une embouchure (12) du canal (14).

3. Vanne de desserrage rapide suivant la revendication 2, **caractérisée en ce que** la membrane (7) ferme, par application de la membrane (7) à l'embouchure (12) du canal, cette embouchure du canal.

4. Vanne de desserrage rapide suivant la revendication 2, **caractérisée en ce que** la membrane (7) a, sur sa surface, un élément (31) d'étanchéité, qui, par application de l'élément (31) d'étanchéité à l'embouchure (12) du canal, ferme cette embouchure du canal.

5. Vanne de desserrage rapide suivant l'une des revendications précédentes,
**caractérisée en ce qu'**il est prévu au moins un raccord (4) du conduit (5) de pression de référence pour un dispositif extérieur de remplissage du conduit (5) de pression de référence.

6. Vanne de desserrage rapide suivant l'une des revendications précédentes,
**caractérisée en ce que**, au conduit (5) de pression de référence, est raccordé un espace (6) d'accumulation pour augmenter le volume du conduit (5) de pression de référence.

7. Vanne de desserrage rapide suivant l'une des revendications précédentes,
**caractérisée en ce que** la membrane (7) déplace, par un piston (8), une tige (9) de piston pour transmettre la position de la membrane (7) à un mécanisme extérieur, qui, en fonction de cette position, règle la pression du fluide dans au moins un cylindre de frein.

8. Vanne de desserrage rapide suivant l'une des revendications précédentes,
**caractérisée en ce que** l'élément (22) du tiroir empêche, en une position de manoeuvre, un passage de la chambre (21) de pression d'accumulation à l'atmosphère, pour accélérer l'établissement d'une pression d'accumulation dans la chambre (21) de pression d'accumulation.

9. Vanne de desserrage rapide suivant l'une des revendications précédentes, **caractérisée en ce que** le canal (26) est constitué dans l'élément (22) du tiroir et en fait d'une embouchure de canal se trouvant dans la chambre (21) de pression d'accumulation à une embouchure de canal se trouvant dans une surface latérale de l'élément (22) du tiroir.

10. Vanne de desserrage rapide suivant la revendication 10, **caractérisée en ce que** l'élément (22) du tiroir est rendu étanche dynamiquement par rapport au corps par deux joints (23, 24) d'étanchéité, qui sont à distance axialement l'un de l'autre, de manière à ce que l'embouchure du canal, dans la surface latérale de l'élément (22) du tiroir, se trouve, en une position de manoeuvre de l'élément du tiroir, entre les deux joints (23, 24) d'étanchéité et, en une position de base, à l'extérieur de ceux-ci.

11. Vanne de desserrage rapide suivant l'une des revendications précédentes,
**caractérisée en ce que** la monostabilité de l'élément (22) du tiroir ou du tiroir (17) est réalisée par un ressort (25; 19) de compression monté de manière à agir entre un côté frontal de l'élément (22) ou du tiroir (17) et le corps (1).
